# EUROPÄISCHE PATENTSCHRIFT

(11) **EP 0 971 307 B1**
(45) Veröffentlichungstag und Bekanntmachung des Hinweises auf die Patenterteilung: **15.03.2006**
(21) Anmeldenummer: 99112051.0
(22) Anmeldetag: 22.06.1999
(51) Int. Cl.: G06K 7/10

(54) **Barcode-Lesevorrichtung**
Barcode reading device
Dispositif de lecture de code à barres

(30) Priorität: 08.07.1998 DE 19830553
(43) Veröffentlichungstag der Anmeldung: 12.01.2000
(73) Patentinhaber: SICK AG, 79183 Waldkirch, Breisgau (DE)
(72) Erfinder: Runge, Wolfram, Dr.-Ing., 79104 Freiburg (DE); Pastor, Sebastian, 79108 Freiburg (DE)
(74) Vertreter: Manitz, Finsterwald & Partner GbR

(56) Entgegenhaltungen:
- DE-U- 29 623 079
- US-A- 3 684 866
- US-A- 5 347 121
- US-A- 5 386 105
- US-A- 5 510 826
- PATENT ABSTRACTS OF JAPAN vol. 014, no. 301 (P-1069), 28. Juni 1990 (1990-06-28) & JP 02 096111 A (RICOH CO LTD), 6. April 1990 (1990-04-06)

## Beschreibung

Die Erfindung betrifft eine Barcode-Lesevorrichtung zum Abtasten eines Barcodes entlang einer Scanrichtung, mit einer Laserlichtquelle zur Erzeugung eines Sendelichtstrahls und einer Blende zur Begrenzung des Querschnitts des Sendelichtstrahls, wobei die Blende eine Blendenöffnung besitzt, deren Umrandung vier aneinandergrenzende Abschnitte aufweist, von denen zwei Abschnitte einander gegenüberliegen und im wesentlichen quer zu der Scanrichtung verlaufen (Querabschnitte) und von denen zwei Abschnitte einander gegenüberliegen und im wesentlichen entlang der Scanrichtung verlaufen (Längsabschnitte).

Derartige Barcode-Lesevorrichtungen dienen zum Abscannen von Barcodes. Die Scanrichtung entspricht dabei der Richtung der Relativbewegung zwischen Sendelichtstrahl und Barcode. Eine derartige Relativbewegung kann beispielsweise erzielt werden, indem die Barcode-Lesevorrichtung eine Umlenkeinheit aufweist, durch die der Sendelichtstrahl an einem stationären Barcode entlang der Scanrichtung periodisch umgelenkt wird, oder indem ein Barcode entlang der Scanrichtung durch einen stationären Sendelichtstrahl geführt wird.

Der den Barcode beaufschlagende Sendelichtstrahl erscheint an diesem als Lichtfleck, der für das korrekte Identifizieren der Striche des Barcodes eine ausreichend geringe Ausdehnung besitzen soll. In vielen Anwendungsfällen der Barcode-Lesevorrichtung ist eine möglichst große Tiefenschärfe erwünscht, d. h. der Lichtfleck soll die ausreichend geringe Ausdehnung entlang eines möglichst großen Lesebereichs vor und hinter dem Barcode beibehalten. Zu diesem Zweck ist neben dem Einsatz von abbildender Optik die Verwendung von Blenden mit Blendenöffnungen bekannt, die den Querschnitt des Sendelichtstrahls begrenzen und deren Umrandung sich auf die eingangs genannte Weise bezüglich der Scanrichtung in zwei einander gegenüberliegende Querabschnitte und zwei einander gegenüberliegende Längsabschnitte unterteilen läßt.

Die Begrenzung der Ausdehnung des Lichtflecks durch derartige Blenden mit entsprechend kleinen Öffnungen ist jedoch aufgrund von Beugungseffekten beschränkt: Die Beugung des Sendelichtstrahls an der Umrandung der Blendenöffnung bewirkt, daß der Verlauf der Intensität des Lichtflecks von einem ursprünglich gleichmäßigen Verlauf erheblich abweichen kann. Diese Beugungserscheinungen am Barcode stören jedoch die korrekte Identifizierung der Striche bzw. deren Breite in nachteiliger Weise. Aufgrund dieses Effekts können die Blendenöffnungen und somit der Querschnitt des Sendelichtstrahls also nicht beliebig reduziert werden, und die Schärfentiefe der bekannten Barcode-Lesevorrichtungen ist in unerwünschtem Ausmaß beschränkt.

Aus der DE 296 23 079 U1 ist eine Barcode-Lesevorrichtung gemäß dem Oberbegriff des Anspruchs 1 bekannt. Verschiedene Blendenöffnungen mit einer abgestuften Form sind gezeigt.

Die US 3,684,866 zeigt eine Blendenöffnung in der Form eines Parallelogramms

Aus der US 5,386,105 ist es bekannt, an der Umrandung einer Blendenöffnung Segmente einer unterschiedlichen Durchlässigkeit vorzusehen.

Es ist eine Aufgabe der Erfindung, eine Barcode-Lesevorrichtung der eingangs genannten Art zu schaffen, die eine verbesserte Schärfentiefe aufweist.

Diese Aufgabe wird durch eine Barcode-Lesevorrichtung mit den Merkmalen des Anspruchs 1 gelöst.

Indem der erfindungsgemäße Ausgleichsvorsprung in Richtung des jeweils gegenüberliegenden Querabschnitts der Blendenöffnung weist, verläuft er wenigstens näherungsweise parallel zu der Scanrichtung.

Die Ausbildung des Ausgleichsvorsprungs als Zwischenextremität ist dadurch definiert, daß die Umrandung der Blendenöffnung an dem betreffenden Querabschnitt an beiden Seiten des Ausgleichsvorsprungs gegenüber diesem zurückversetzt ist. Mathematisch betrachtet bildet der Ausgleichsvorsprung mit seiner Erstreckung entlang der Scanrichtung also ein Maximum bezüglich des betreffenden Querabschnitts. Das Maximum kann in diesem Sinne bezüglich der beiden Enden des betreffenden Querabschnitts oder bezüglich möglicher weiterer Ausgleichsvorsprünge ein lokales oder ein absolutes Maximum darstellen.

Die Umrandung der betreffenden Blendenöffnung kann beispielsweise eine im wesentlichen rechteckige Grundform aufweisen, wobei entweder die beiden kürzeren oder die beiden längeren Rechteckseiten quer zu der Scanrichtung verlaufen und somit definitionsgemäß den mit einem Ausgleichsvorsprung versehenen Querabschnitt bilden. In ähnlicher Weise kann die Umrandung der Blendenöffnung auch eine ovale oder eine runde Grundform besitzen.

Der erfindungsgemäße Ausgleichsvorsprung bewirkt in erwünschter Weise ein zumindest teilweises Verschleifen oder Überlagern jener Beugungserscheinungen, die durch das Abblenden des Sendelichtstrahls an der Umrandung der Blendenöffnung verursacht werden und die an einem Barcode Schwankungen des Intensitätsverlaufs des resultierenden Lichtflecks hervorrufen. Ein erwünschter Ausgleich entsteht, indem der Ausgleichsvorsprung selbst Beugungserscheinungen hervorruft, die den unerwünschten Beugungserscheinungen zumindest teilweise entgegenwirken und diese verschleifen bzw. gegenseitig verschmieren.

Der Ausgleichsvorsprung bewirkt somit einen näherungsweise kontinuierlichen und gleichmäßigen Übergang der Intensität vom Zentrum des Sendelichtstrahls zu seinem Randbereich hin. Dabei werden nicht unbedingt alle Beugungserscheinungen aufgehoben, jedoch werden ihre negativen Auswirkungen wesentlich verringert, so daß sich in vorteilhafter Weise eine stärkere Eingrenzung und Bündelung des Sendelichtstrahls erzielen läßt. Dadurch wird bei der erfindungsgemäßen Barcode-Lesevorrichtung eine größere Schärfentiefe erreicht.

Besonders vorteilhaft erweist sich die erfindungsgemäße Blende, wenn durch den erfindungsgemäßen Querabschnitt ein solcher Teil eines Sendelichtstrahls abgeblendet werden soll, der im Vergleich zu dem Zentrum des Querschnitts des Sendelichtstrahls eine relativ hohe oder sogar ähnliche Intensität besitzt, was letztlich zu starken Beugungserscheinungen führt. Dieser Fall kann beispielsweise auftreten, wenn ein Sendelichtstrahl mit elliptischem Querschnitt derart mittels einer Blendenöffnung von rechteckiger Grundform begrenzt werden soll, daß die Querabschnitte der Umrandung der Blendenöffnung einen deutlich größeren Teil des elliptischen Querschnitt des Sendelichtstrahls abblenden als die Längsabschnitte.

Daß der Ausgleichsvorsprung zumindest an einem Querabschnitt der Blendenöffnung vorgesehen ist, also an einem solchen Abschnitt, der quer und somit im wesentlichen rechtwinklig zu der Scanrichtung steht, birgt den folgenden besonderen Vorteil: Durch einen derartigen Ausgleichsvorsprung können insbesondere jene von der Umrandung der Blendenöffnung verursachten Beugungsmaxima und -minima des Lichtflecks am Barcode verringert werden, die in ihrer Erscheinung als Intensitätsmuster im wesentlichen parallel zu der Erstreckungsrichtung der Barcode-Striche verlaufen und somit deren korrekte Identifizierung besonders stark erschweren. Derartige Beugungsmaxima und -minima werden durch die von dem Ausgleichsvorsprung verursachten Beugungserscheinungen durchbrochen.

Ein weiterer Vorteil der erfindungsgemäßen Blende besteht darin, daß sie sich auf einfache Weise herstellen läßt. Die Öffnungen herkömmlicher Blenden werden beispielsweise durch Laserschneiden, Ätzen, Stanzen oder Bohren erzeugt. Hierbei bedeutet es keinen wesentlichen oder nur geringen zusätzlichen Aufwand, in der Umrandung der Blendenöffnung einen oder mehrere Ausgleichsvorsprünge vorzusehen.

In bevorzugten Ausführungsformen des erfindungsgemäßen Ausgleichsvorsprungs ist dieser als Zacke oder als Zunge ausgebildet, bei der beispielsweise zwei geradlinige oder kurvenförmige Umrandungen den Umriß des Augleichsvorsprungs bilden. Diese beiden Umrandungen können einen spitzen oder einen stumpfen Winkel miteinander einschließen. Der Ausgleichsvorsprung kann auch als gleichmäßig rund geformte oder als rechteckige Zunge ausgebildet sein. Weiterhin ist es möglich, dem Verlauf des Umrisses des Ausgleichsvorsprungs ein stochastisches Muster zu verleihen, welches zum gewünschten Zweck des Ausgleichs von Beugungserscheinungen gezielt chaotische Beugungsmuster hervorruft.

Schließlich ist es auch möglich, den Ausgleichsvorsprung zusätzlich mit seitlichen Einbuchtungen oder Vorsprüngen zu versehen, um den gewünschten Effekt des gegenseitigen Ausgleichs der hervorgerufenen Beugungserscheinungen noch weiter zu verstärken.

Die Umrandung der Blendenöffnung kann an ihren beiden Querabschnitten einen Ausgleichsvorsprung besitzen, damit der gewünschte Ausgleich von Beugungserscheinungen sowohl in als auch entgegen der gewählten Scanrichtung erfolgt. Weiterhin ist es bevorzugt, wenn der betreffende Querabschnitt bzw. die beiden Querabschnitte mehrere Ausgleichsvorsprünge aufweisen. Außerdem können ein oder mehrere Ausgleichsvorsprünge der genannten Art auch an einem Längsabschnitt oder den beiden Längsabschnitten der Umrandung der Blendenöffnung ausgebildet sein.

Durch eine Mehrzahl von Ausgleichsvorsprüngen kann der Ausgleich von Beugungserscheinungen durch deren gegenseitiges Vermischen und Verschleifen besonders wirksam hervorgerufen werden. Diese mehreren Ausgleichsvorsprünge bilden entlang des betreffenden Querabschnitts vorzugsweise eine stochastische Anordnung, d. h. eine nicht periodische, insbesondere gezielt chaotische Anordnung. Dadurch kann das Auftreten von periodischen Beugungs- oder Interferenzmustern vermieden werden. Allerdings kann auch eine periodische Anordnung von mehreren Ausgleichsvorsprüngen den gewünschten Ausgleich der Beugungserscheinungen bewirken.

Weitere bevorzugte Erfindungsformen der Erfindung sind in den Unteransprüchen beschrieben. Die Erfindung wird nachstehend anhand von Ausführungsbeispielen unter Bezugnahme auf die Zeichnungen beschrieben; in diesen zeigen:
- Figur 1: eine schematische Perspektivansicht von Teilen einer erfindungsgemäßen Barcode-Lesevorrichtung,
- Figur 2a: die Überlagerung des elliptischen Querschnitts eines Sendelichtstrahls über einer rechteckigen Umrandung einer Blendenöffnung,
- Figur 2b: den Intensitätsverlauf eines von dem Sendelichtstrahl gemäß Figur 2A verursachten Lichtflecks entlang der Scanrichtung,
- Figur 2c: den Intensitätsverlauf eines von dem Sendelichtstrahl gemäß Figur 1 verursachten Lichtflecks entlang der Scanrichtung,
- Figuren 3a - 3h: verschiedene erfindungsgemäße Blenden mit unterschiedlichen Ausgleichsvorsprüngen, und

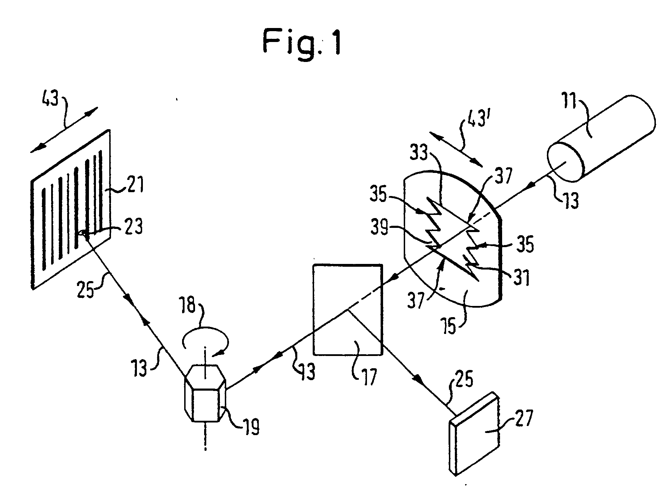

Figur 1 zeigt in schematischer Perspektivansicht Teile einer erfindungsgemäßen Barcode-Lesevorrichtung. Diese besitzt eine Laserlichtquelle 11, die einen Sendelichtstrahl 13 aussendet, wobei in Figur 1 lediglich die durch das Zentrum des Sendelichtstrahls 13 verlaufende Strahlachse dargestellt ist. Entlang des Sendelichtstrahls 13 sind hintereinander eine erfindungsgemäße Blende 15, ein als ein teildurchlässiger Spiegel 17 ausgebildeter Strahlteiler und ein als Umlenkeinheit fungierender, in Richtung 18 rotierender Polygonspiegel 19 angeordnet. Der Polygonspiegel 19 reflektiert in variierenden Ablenkwinkeln den Sendelichtstrahl 13 in Richtung eines Barcode-Elements 21.

Der Sendelichtstrahl 13 erscheint an dem Barcode-Element 21 als ein in Scanrichtung 43 wandernder Lichtfleck 23, und er wird von dort u.a. als Empfangslichtstrahl 25 in Richtung des Polygonspiegels 19 reflektiert. Dieser Empfangslichtstrahl 25 wird von dem Polygonspiegel 19 in Richtung des teildurchlässigen Spiegels 17 und von diesem auf ein Empfangselement 27 umgelenkt.

Die erfindungsgemäße Blende 15 besitzt eine Blendenöffnung 31 von rechteckiger Grundform. Die Umrandung 33 der Blendenöffnung 31 weist zwei einander gegenüberliegende Querabschnitte 35 sowie zwei einander gegenüberliegende, geradlinig ausgebildete Längsabschnitte 37 auf. Jeder der beiden Querabschnitte 35 besitzt drei als spitzwinklige Zacken geformte Ausgleichsvorsprünge 39.

Während die durch den rotierenden Polygonspiegel 19 bewirkte periodische Umlenkung des Sendelichtstrahls 13 aufgrund der gleichförmigen Rotationsbewegung 18 des Polygonspiegels 19 nur in eine einzige Richtung erfolgt, ist die Scanrichtung 43 in der Figur 1 und in den weiteren Figuren als Doppelpfeil dargestellt, da es bei den bekannten Barcode-Lesevorrichtungen unerheblich ist, in welcher der beiden durch die dargestellte Scanrichtung 43 vorgegebenen Richtungen der Barcode vom Sendelichtstrahl 13 überstrichen wird. Außerdem kann anstelle des Polygonspiegels 19 als Umlenkeinheit auch ein Schwingspiegel vorgesehen sein, durch den der Sendelichtstrahl 13 oszillierend entlang der beiden durch die Scanrichtung 43 vorgegebenen Richtungen umgelenkt wird.

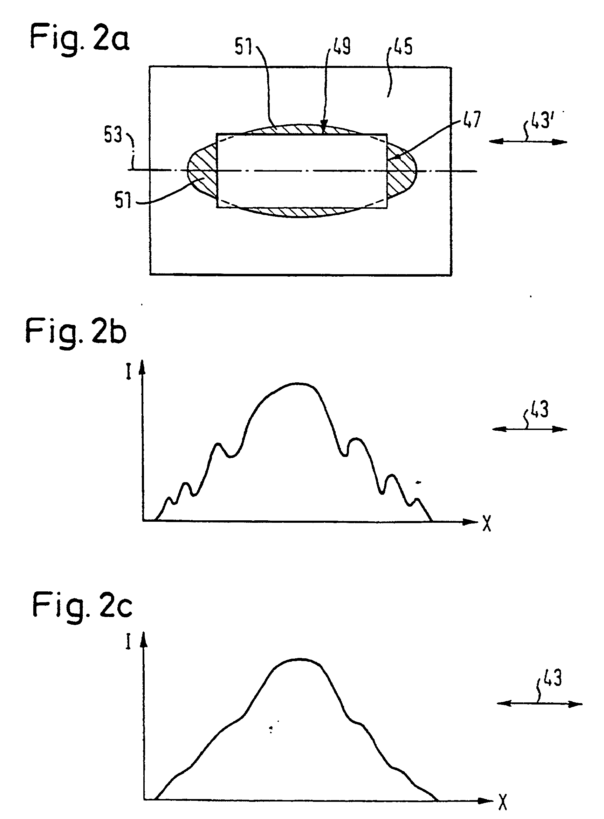

Im Bereich der Blende 15 erfährt der Sendelichtstrahl 13 zwar keine periodische Umlenkung. Da der Sendelichtstrahl 13 am Polygonspiegel 19 jedoch eine rein geometrische Reflexion erfährt, ist auch im Bereich der Blende 15 eine der Scanrichtung 43 am Barcode-Element 21 entsprechende Scanrichtung 43' eindeutig definiert. Die Lage der beiden Querabschnitte 35 der Blendenöffnung 31 sowie die daran ausgebildeten Ausgleichsvorsprünge 39 sind erfindungsgemäß von dieser Scanrichtung 43' abhängig. Zweck und Vorteil dieser Abhängigkeit werden nachfolgend anhand der Figuren 2a bis 2c erläutert.

Figur 2a zeigt eine bekannte Blende 45 mit einer Öffnung, deren Umrandung im Sinne der eingangs genannten Definition bezüglich der Scanrichtung 43' zwei jeweils einander gegenüberliegende und geradlinig ausgebildete Querabschnitte 47 bzw. Längsabschnitte 49 aufweist. Die Blende 45 wird im Bereich der Umrandung ihrer Öffnung von einem Sendelichtstrahl elliptischen Querschnitts derart beaufschlagt, daß die Querabschnitte 47 und die Längsabschnitte 49 jeweils einen in der Darstellung gemäß Figur 2A schraffiert gezeigten Randbereich 51 des Sendelichtstrahls abblenden.

Die Querabschnitte 47 und Längsabschnitte 49 bewirken eine Beugung des die Öffnung der Blende 45 durchlaufenden Sendelichtstrahls, so daß der Intensitätsverlauf des verbleibenden Querschnitts des Sendelichtstrahls Beugungsmaxima und -minima aufweist. Figur 2b zeigt schematisch den Verlauf der Lichtintensität I des Sendelichtstrahls, nachdem dieser die Blende 45 gemäß Figur 2a passiert hat, und zwar für einen ausreichenden Abstand von der Blende 45 und für verschiedene Positionen X entlang einer Achse 53, die innerhalb des Querschnitts des Sendelichtstrahls durch dessen Zentrum und parallel zu der Scanrichtung 43' bzw. 43 verläuft.

Wenn für den Querschnitt des betreffenden Sendelichtstrahls vor Durchlaufen der Blende 45 ein im wesentlichen gaußkurvenförmiger Verlauf seiner Intensität angenommen wird, zeigt der Intensitätsverlauf I des nach Durchlaufen der Blende 45 verbleibenden Sendelichtstrahls - wie in Fig. 2b gezeigt - Abweichungen von dieser Gaußkurvenform dahingehend, daß an den beiden dem jeweiligen Randbereich des verbleibenden Sendestrahls entsprechenden Flanken deutliche Intensitätsmaxima und -minima zu erkennen sind. Gerade diese in Figur 2b ersichtlichen Beugungserscheinungen entlang der Achse 53 und somit entlang der Scanrichtung 43 können das Abtasten eines Barcodes besonders erschweren.

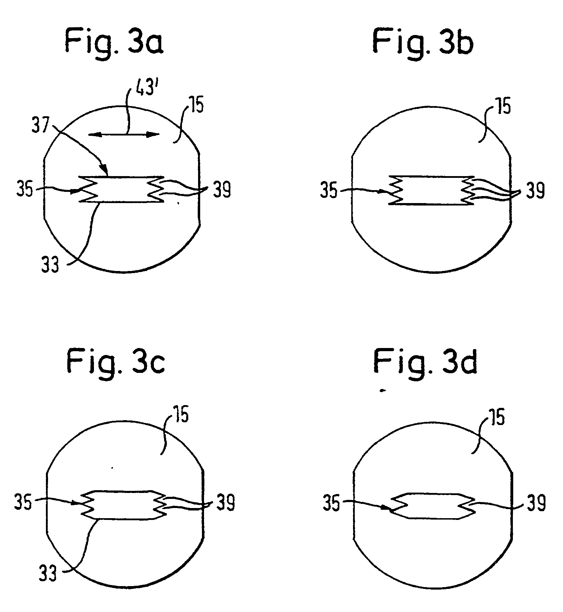

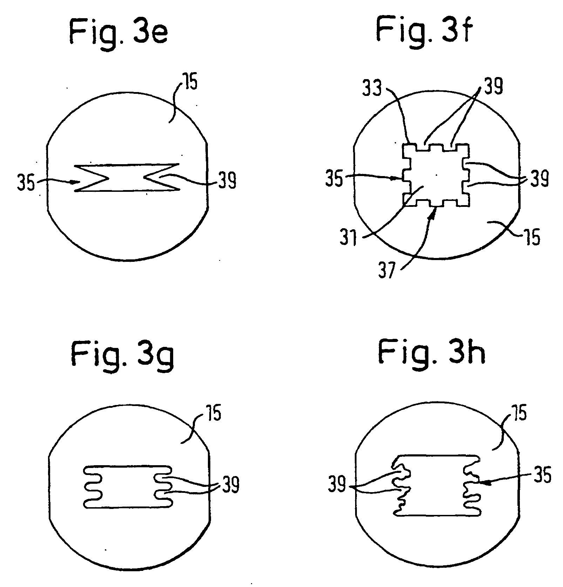

Diese unerwünschten Beugungserscheinungen können zumindest teilweise dadurch ausgeglichen werden, daß anstelle der Blende 45 mit rechtekkiger Öffnung eine erfindungsgemäße Blende 15 verwendet wird, wie sie vorstehend anhand von Figur 1 und nachfolgend anhand der Figuren 3a - 3h erläutert wird. Falls wieder von einem querelliptischen Querschnitt und einem gaußkurvenförmigen Intensitätsverlauf des ursprünglichen Sendelichtstrahls ausgegangen wird, so ergibt sich nach Durchlaufen einer erfindungsgemäßen Blende 15 ein Intensitätsverlauf I entlang der Scanrichtung 43, der weiterhin näherungsweise einer Gaußkurvenform folgt und für einen ausreichenden Abstand von der Blende 15 schematisch in Fig. 2c gezeigt ist. Die erfindungsgemäße Blende 15 vermag also, die unerwünschten Beugungserscheinungen weitestgehend zu unterdrükken. Dadurch kann diese Blende 15 dazu verwendet werden, den Sendelichtstrahl 13 noch stärker seitlich zu begrenzen, was letztlich vorteilhaft eine erweiterte Schärfentiefe ermöglichen kann.

Ausgehend von einer rechteckigen oder einer beliebigen anderen Grundform ist für die erfindungsgemäße Blende 15 eine Vielzahl möglicher Ausgestaltungen mit zumindest einem Ausgleichsvorsprung 39 an wenigstens einem Querabschnitt 35 der Umrandung 33 ihrer Öffnung 31 möglich. Beispiele hierfür sind in Figuren 3a - 3h gezeigt.

So zeigen die Figuren 3a und 3c jeweils eine Blende 15, bei der beide Querabschnitte 35 der Umrandung 33 zwei als spitzwinklige Zacken ausgebildete Ausgleichsvorsprünge 39 aufweisen. Figur 3b zeigt jeweils drei Ausgleichsvorsprünge 39 an jedem Querabschnitt 35. In den Figuren 3d und 3e ist an jedem Querabschnitt 35 jeweils ein Ausgleichsvorsprung 39 als spitzwinklige Zacke ausgebildet. Die Umrandung 33 der Blendenöffnung 31 gemäß Figur 3f geht von einer quadratischen Grundform aus, wobei sowohl an den beiden Querabschnitten 35 als auch an den beiden Längsabschnitten 37 jeweils zwei rechteckige Zungen als Ausgleichsvorsprünge 39 vorgesehen sind. Figur 3g zeigt Ausgleichsvorsprünge 39, die als runde Zungen ausgestaltet sind. Aus Figur 3h sind Querabschnitte 35 ersichtlich, die jeweils mehrere als stochastische Muster ausgebildete Ausgleichsvorsprünge 39 aufweisen, welche entlang des jeweiligen Querabschnitts 35 zusätzlich eine stochastische Anordnung bilden.

### Bezugszeichenliste

- 11: Laserlichtquelle
- 13: Sendelichtstrahl
- 15: Blende
- 17: teildurchlässiger Spiegel
- 18: Rotationsrichtung
- 19: Polygonspiegel
- 21: Barcode-Element
- 23: Lichtfleck
- 25: Empfangslichtstrahl
- 27: Empfangselement
- 31: Blendenöffnung
- 33: Umrandung
- 35: Querabschnitt
- 37: Längsabschnitt
- 39: Ausgleichsvorsprung
- 43: Scanrichtung
- 43': Scanrichtung
- 45: Blende
- 47: Querabschnitt
- 49: Längsabschnitt
- 51: abgeschnittener Randbereich
- 53: Achse

- I: Intenstität des Sendelichts
- X: Position

## Patentansprüche

1. Barcode-Lesevorrichtung zum Abtasten eines Barcodes entlang einer Scanrichtung (43, 43'),
mit einer Laserlichtquelle (11) zur Erzeugung eines Sendelichtstrahls (13) und
einer Blende (15) zur Begrenzung des Querschnitts des Sendelichtstrahls (13), wobei die Blende (15) eine Blendenöffnung (31) besitzt, deren Umrandung (33) vier aneinandergrenzende Abschnitte (35, 37) aufweist, von denen zwei Querabschnitte (35) einander gegenüberliegen und im wesentlichen quer zu der Scanrichtung verlaufen und von denen zwei Längsabschnitte (37) einander gegenüberliegen und im wesentlichen entlang der Scanrichtung verlaufen,
**dadurch gekennzeichnet,**
**daß** zum Ausgleich von Beugungserscheinungen des Sendelichtstrahls (13) die Umrandung (33) der Blendenöffnung zumindest an einem Querabschnitt (35) wenigstens einen Ausgleichsvorsprung (39) aufweist, der bezüglich dieses Querabschnitts (35) in Richtung des gegenüberliegenden Querabschnitts (35) dergestalt als Zwischenextremität in die Blendenöffnung (31) hineinragt, daß die Umrandung (33) der Blendenöffnung an dem betreffenden Querabschnitt (35) an beiden Seiten des Ausgleichsvorsprungs (39) gegenüber dem Ausgleichsvorsprung zurückversetzt ist.

2. Barcode-Lesevorrichtung nach Anspruch 1,
**dadurch gekennzeichnet,**
**daß** der Ausgleichsvorsprung (39) als eine spitzwinklige Zacke, eine runde oder kreisbogenförmige Zunge, eine rechteckige Zunge und/oder ein stochastisches Muster ausgebildet ist.

3. Barcode-Lesevorrichtting nach einem der vorhergehenden Ansprüche,
**dadurch gekennzeichnet,**
**daß** die Umrandung (33) der Blendenöffnung (31) an dem betreffenden Querabschnitt (35) mehrere Ausgleichsvorsprünge (39) aufweist.

4. Barcode-Lesevorrichtung nach Anspruch 3,
**dadurch gekennzeichnet,**
**daß** die mehreren Ausgleichsvorsprünge (39) entlang des betreffenden Querabschnitts (35) eine stochastische oder eine periodische Anordnung bilden.

5. Barcode-Lesevorrichtung nach einem der vorhergehenden Ansprüche,
**dadurch gekennzeichnet,**
**daß** der dem betreffenden Querabschnitt (35) gegenüberliegende Querabschnitt (35) einen oder mehrere Ausgleichsvorsprünge (39) aufweist.

6. Barcode-Lesevorrichtung nach einem der vorhergehenden Ansprüche,
**dadurch gekennzeichnet,**
**daß** wenigstens ein Längsabschnitt (37) ebenfalls wenigstens einen Ausgleichsvorsprung (39) aufweist.

7. Barcode-Lesevorrichtung nach einem der vorhergehenden Ansprüche,
**dadurch gekennzeichnet,**
**daß** die Barcode-Lesevorrichtung eine Umlenkeinheit (19) aufweist zur periodischen Umlenkung des Sendelichtstrahls (13) entlang der Scanrichtung (43).

8. Barcode-Lesevorrichtung nach einem der vorhergehenden Ansprüche,
**dadurch gekennzeichnet,**
**daß** die Umrandung (33) der Blendenöffnung (31) eine bezüglich der Scanrichtung (43) im wesentlichen rechteckige, ovale oder runde Grundform aufweist.

## Claims

1. Bar code reading apparatus for the sensing of a bar code along a scanning direction (43, 43'),
comprising a laser light source (11) to produce a transmitted light beam (13);
and a diaphragm (15) to restrict the cross-section of the transmitted light beam (13), wherein the diaphragm (15) has a diaphragm aperture (31), the boundary (33) of which has four mutually adjoining sections (35, 37), of which two transverse sections (35) lie opposite to one another and extend substantially transversely to the scanning direction, and of which two longitudinal sections (37) lie opposite to one another and extend substantially along the scanning direction,
**characterized in that**,
to compensate for diffraction effects of the transmitted light beam (13), the boundary (33) of the diaphragm aperture has at least one compensatory projection (39) at at least one transverse section (35), with the compensatory projection projecting as an intermediate extremity into the diaphragm aperture (31) with respect to this transverse section (35) in the direction towards the oppositely disposed transverse section (35) such that the boundary (33) of the diaphragm aperture is set back with respect to the compensatory projection at both sides of the compensatory projection (39) at the relevant transverse section (35).

2. Bar code reading apparatus in accordance with claim 1, **characterized in that** the compensatory projection (39) is formed as an acute angled tooth, a rounded or circular arc-like tongue, a rectangular tongue and/or as a stochastic pattern.

3. Bar code reading apparatus in accordance with any one of the preceding claims, **characterized in that** the boundary (33) of the diaphragm aperture (31) has a plurality of compensatory projections (39) at the relevant transverse section (35).

4. Bar code reading apparatus in accordance with claim 3, **characterized in that** the plurality of compensatory projections (39) form a stochastic arrangement or a periodic arrangement along the relevant transverse section (35).

5. Bar code reading apparatus in accordance with any one of the preceding claims, **characterized in that** the transverse section (35) opposite to the relevant transverse section (35) has one or more compensatory projections (39).

6. Bar code reading apparatus in accordance with any one of the preceding claims, **characterized in that** at least one longitudinal section (37) likewise has at least one compensatory projection (39).

7. Bar code reading apparatus in accordance with any one of the preceding claims, **characterized in that** the bar code reading apparatus has a deflection unit (19) for the periodic deflection of the transmitted light beam (13) along the scanning direction (43).

8. Bar code reading apparatus in accordance with any one of the preceding claims, **characterized in that** the boundary (33) of the diaphragm aperture (31) has a substantially rectangular, oval or round basic shape with respect to the scanning direction (43).

## Revendications

1. Dispositif de lecture de code à barres, destiné à palper un code à barres le long d'une direction de scannage (43, 43'),
comportant une source de lumière laser (11) pour générer un faisceau lumineux émis (13) et
un cache (15) pour délimiter la section transversale du faisceau lumineux émis (13), le cache (15) possédant une ouverture de cache (31) dont l'encadrement (33) comprend quatre tronçons adjacents (35, 37) dont deux tronçons transversaux (35) sont opposés l'un à l'autre et s'étendent sensiblement transversalement à la direction de scannage et dont deux tronçons longitudinaux (37) sont opposés l'un à l'autre et s'étendent sensiblement le long de la direction de scannage,
**caractérisé en ce que**
pour compenser des phénomènes de diffraction du faisceau lumineux émis (13), l'encadrement (33) de l'ouverture de cache comprend sur au moins un tronçon transversal (35) au moins une saillie de compensation (39) qui, par rapport à ce tronçon transversal (35), pénètre en direction du tronçon transversal opposé (35) sous la forme d'une extrémité intermédiaire dans l'ouverture de cache (31) de telle sorte que l'encadrement (33) de l'ouverture de cache est en retrait par rapport à la saillie de compensation de part et d'autre de la saillie de compensation (39) sur le tronçon transversal concerné (35).

2. Dispositif de lecture de code à barres selon la revendication 1, **caractérisé en ce que** la saillie de compensation (39) est réalisée sous la forme d'une dent à angle aigu, d'une languette ronde ou en forme d'arc de cercle, d'une languette rectangulaire et/ou d'un motif stochastique.

3. Dispositif de lecture de code à barres selon l'une des revendications précédentes, **caractérisé en ce que** l'encadrement (33) de l'ouverture de cache (31) présente plusieurs saillies de compensation (39) sur le tronçon transversal concerné (35).

4. Dispositif de lecture de code à barres selon la revendication 3, **caractérisé en ce que** les plusieurs saillies de compensation (39) forment un agencement stochastique ou périodique le long du tronçon transversal concerné (35).

5. Dispositif de lecture de code à barres selon l'une des revendications précédentes, **caractérisé en ce que** le tronçon transversal (35) opposé au tronçon transversal concerné (35) comprend une ou plusieurs saillies de compensation (39).

6. Dispositif de lecture de code à barres selon l'une des revendications précédentes, **caractérisé en ce qu'**au moins un tronçon longitudinal (37) comprend également au moins une saillie de compensation (39).

7. Dispositif de lecture de code à barres selon l'une des revendications précédentes, **caractérisé en ce que** le dispositif de lecture de code à barres comprend une unité de déflexion (19) pour la déflexion périodique du faisceau lumineux émis (13) le long de la direction de scannage (43).

8. Dispositif de lecture de code à barres selon l'une des revendications précédentes, **caractérisé en ce que** l'encadrement (33) de l'ouverture de cache (31) présente une forme de base sensiblement rectangulaire, ovale ou ronde par rapport à la direction de scannage (43).
